# EUROPEAN PATENT SPECIFICATION

(11) **EP 2 682 616 B1**
(45) Date of publication and mention of the grant of the patent: **16.09.2015**
(21) Application number: 12752466.8
(22) Date of filing: 10.02.2012
(51) Int. Cl.: F16B 37/02, F16B 37/00, F16B 37/04, F16B 2/08, H02G 3/30

(54) **BRACKET WITH NUT**
KLAMMER MIT MUTTER
SUPPORT À ÉCROU

(30) Priority: 28.02.2011 JP 2011041367
(43) Date of publication of application: 08.01.2014
(73) Proprietor: Honda Motor Co., Ltd., Minato-ku Tokyo 107-8556 (JP)
(72) Inventor: SUZUKI Youichirou, Wako-shi Saitama 351-0193 (JP)
(74) Representative: Weickmann & Weickmann
(86) International application number: PCT/JP2012/053086
(87) International publication number: WO 2012/117827

(56) References cited:
- FR-A1- 2 799 518
- FR-A1- 2 823 264
- JP-A- 3 181 606
- JP-A- 11 264 406
- JP-A- H03 181 606
- JP-A- H11 264 406
- JP-A- 2003 074 524
- JP-A- 2003 074 524
- JP-A- 2005 076 889
- JP-A- 2005 076 889
- JP-A- 2009 534 611
- JP-A- 2009 534 611
- JP-A- 2010 018 061
- JP-U- S 514 708
- JP-U- S6 351 914
- JP-U- 50 014 708
- JP-U- 63 051 914
- US-A1- 2006 249 633
- US-A1- 2006 249 633
- US-B1- 6 283 689
- US-B1- 6 283 689

## Description

### TECHNICAL FIELD

The present invention relates to a bracket with nut, the bracket being fitted into an interior of a groove-shaped bead formed on a surface of a member.

### BACKGROUND ART

An arrangement in which, when fixing is carried out by driving a pierce nut into a wall face of an aluminum alloy extruded material having a closed cross-section from its hollow interior side, in order to strongly fix the pierce nut to the wall face of the aluminum alloy extruded material, the plate thickness of the wall face into which it is driven is made larger than the plate thickness of other portions, is known from Patent Document 1 below.

### RELATED ART DOCUMENTS

### PATENT DOCUMENTS

Patent Document 1: Japanese Patent Application Laid-open No. 2010-18061

### SUMMARY OF INVENTION

### PROBLEMS TO BE SOLVED BY THE INVENTION

When a member to be secured is secured by means of a bolt to the surface of a member having a groove-shaped bead formed thereon, the invention described in Patent Document 1 above gives rise to the following problems.

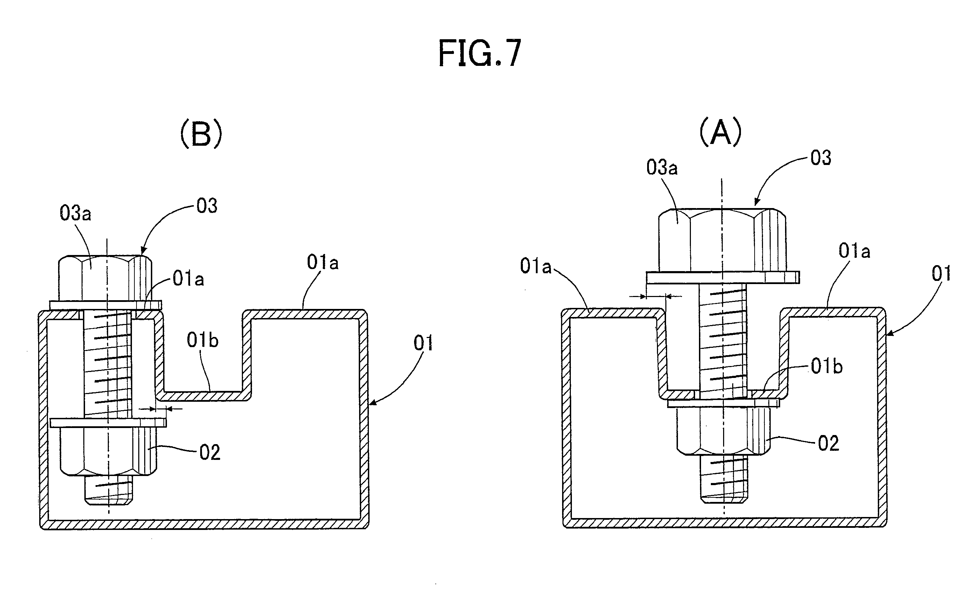

A case can be considered in which, as shown in FIG. 7 (A), a groove-shaped bead 01b is formed between surfaces 01a and 01a of a member 01 having a closed cross-section, and screwing a bolt 03 into a nut 02 provided on the reverse side of the bead 01b fixes a member that is to be secured. In this case, if the width of the bead 01b is smaller than the diameter of a head portion 03a of the bolt 03, the head portion 03a of the bolt 03 cannot be fitted within the bead 01b, and there is the problem that the member to be secured cannot be fixed to the bottom of the bead 01b. If, in order to avoid this, the member to be secured is fixed to the surfaces 01a and 01a of the member 01, since a space is present between a lower face of the member to be secured and the bottom of the bead 01b, there is the problem that the tightening force of the bolt 03 cannot be fully transmitted to the member to be secured.

If, in order to fix a member to be secured to one surface 01a of the member 01 while avoiding the position of the bead 01b, a nut 02 is disposed on the reverse side of the surface 01a, as shown in FIG. 7 (B), since the nut 02 interferes with the bead 01b, there is a possibility that it will not be able to be disposed on the reverse side of the surface 01a.

The present invention has been accomplished in light of the above-mentioned circumstances, and it is an object thereof to provide a bracket with nut that can easily and reliably fix a member to the surface of another member having a groove-shaped bead formed thereon.

### MEANS FOR SOLVING THE PROBLEMS

In order to attain the above object, according to a first aspect of the present invention, there is provided a bracket with nut that is fitted into an interior of a groove-shaped bead formed on a surface of a member, the bracket with nut comprising a nut part into which a bolt is screwed, and a bracket part that supports the nut part and is retained by an opening formed in a bottom wall of the bead, the bracket part comprising a base portion that abuts against the surface on opposite sides of the bead, a pair of first leg portions that extend in a direction in which the first leg portions approach each other along the bottom wall of the bead from two positions, in a longitudinal direction of the bead, of the base portion, a pair of second leg portions that extend from tips of the pair of first leg portions while extending through the opening, and a pair of third leg portions that extend in a direction in which the third leg portions approach each other from the tips of the pair of second leg portions and are opened out by the bolt, and the nut part being provided at a position, sandwiched by the pair of first leg portions, of the base portion.

Further, according to a second aspect of the present invention, in addition to the first aspect, the second leg portion has a width that is substantially equal to the width, in a direction perpendicular to the longitudinal direction of the bead, of the opening.

Furthermore, according to a third aspect of the present invention, in addition to the first or second aspect, the bracket part is formed by bending a single sheet of metal plate.

Moreover, according to a fourth aspect of the present invention, in addition to any one of the first to third aspects, the nut part is formed integrally with the bracket part.

Further, according to a fifth aspect of the present invention, in addition to the first or second aspect, the bracket part is formed as a unit from a resin.

Furthermore, according to a sixth aspect of the present invention, in addition to the fifth aspect, the nut part is formed integrally with the bracket part.

A vehicle body frame 11 of embodiments corresponds to the member of the present invention.

### EFFECTS OF THE INVENTION

In accordance with the first aspect of the present invention, the bracket with nut fitted into the interior of the groove-shaped bead formed on the surface of the member includes the nut part into which the bolt is screwed and the bracket part that supports the nut part and is retained in the opening formed in the bottom wall of the bead. Since the bracket part includes the base portion that abuts against the surface of the member on opposite sides of the bead, the pair of first leg portions extending in a direction in which they approach each other along the bottom wall of the bead from two positions, along the longitudinal direction of the bead, of the base portion, the pair of second leg portions extending from the tips of the pair of first leg portions while extending through the opening, and the pair of third leg portions extending in a direction in which they approach each other from the tips of the pair of second leg portions and being opened out by the bolt, in a state in which the second leg portions and the third leg portions of the bracket part are inserted into the opening of the bottom wall of the bead, by screwing the bolt into the nut part provided on the base portion the third leg portions are pushed by the bolt to thus open out the second leg portions on the interior side of the opening, thus retaining the bracket part so that it does not fall out of the opening and thereby enabling another member to be secured to the base portion of the member by screwing the bolt into the nut part.

As a result, even if the width of the bead is narrow, not only is it possible to enhance the securing rigidity by utilizing the entire face of the base portion straddling the surfaces of the member on opposite sides of the bead as a securing face for another member, but it also becomes possible to increase the diameter of the head portion of the bolt without it being limited by the width of the bead, thereby ensuring a sufficient tightening force. Furthermore, when a moment that attempts to collapse the bracket in the longitudinal direction of the bead acts thereon, the base portion straddling the surfaces of the member on opposite sides of the bead exhibits resistance to the moment to thus prevent the bracket part from collapsing, and when a moment that attempts to collapse the bracket in a direction perpendicular to the longitudinal direction of the bead acts thereon, the second leg portions engaging with the interior side of the opening exhibit resistance to the moment to thus prevent the bracket part from collapsing.

Furthermore, in accordance with the second aspect of the present invention, since the width of the second leg portions is substantially equal to the width, in the direction perpendicular to the longitudinal direction of the bead, of the opening, it is possible to prevent the bracket part from rotating by being dragged when a bolt is screwed into the nut part in a state in which the second leg portions are inserted into the opening, thus enhancing the workability.

Moreover, in accordance with the third aspect of the present invention, since the bracket part is formed by bending a single sheet of metal plate, it is possible to simplify the structure and reduce the production cost.

Furthermore, in accordance with the fourth aspect of the present invention, since the nut part and the bracket part are formed as a unit, it is possible to cut the number of components and simplify the structure.

Moreover, in accordance with the fifth aspect of the present invention, since the bracket part is formed from a resin as a unit, it is possible to simplify the structure and reduce the production cost.

Furthermore, in accordance with the sixth aspect of the present invention, since the nut part and the bracket part are formed as a unit, it is possible to reduce the number of components and simplify the structure.

### BRIEF DESCRIPTION OF DRAWINGS

[FIG. 1] FIG. 1 is a diagram showing a state in which a stay is fixed to a vehicle body frame using a bracket with nut. (first embodiment)
[FIG. 2] FIG. 2 is an exploded perspective view corresponding to FIG. 1. (first embodiment)
[FIG. 3] FIG. 3 is a sectional view along line 3(A)-3(A) and a sectional view along line 3(B)-3(B) in FIG. 1. (first embodiment)
[FIG. 4] FIG. 4 is a sectional view along line 4(A)-4(A) and a sectional view along line 4(B)-4(B) in FIG. 2. (first embodiment)
[FIG. 5] FIG. 5 is a view corresponding to FIG. 3. (second embodiment)
[FIG. 6] FIG. 6 is a view corresponding to FIG. 4. (third embodiment)
[FIG. 7] FIG. 7 is a diagram for explaining the problem of a conventional example. (conventional example)

### EXPLANATION OF REFERENCE NUMERALS AND SYMBOLS

11 Member (vehicle body frame)
11 a Surface
11b Bead
11c Opening
12 Bracket with nut
13 Bracket part
13a Base portion
13b First leg portion
13c Second leg portion
13d Third leg portion
14 Nut part
15 Bolt
b Bottom wall

### MODES FOR CARRYING OUT THE INVENTION

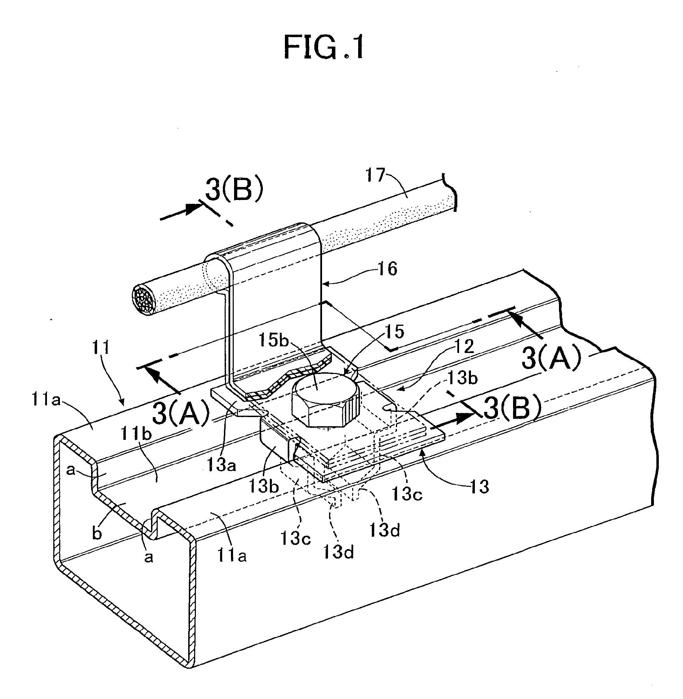

A first embodiment of the present invention is explained below by reference to FIG. 1 to FIG. 4.

### FIRST EMBODIMENT

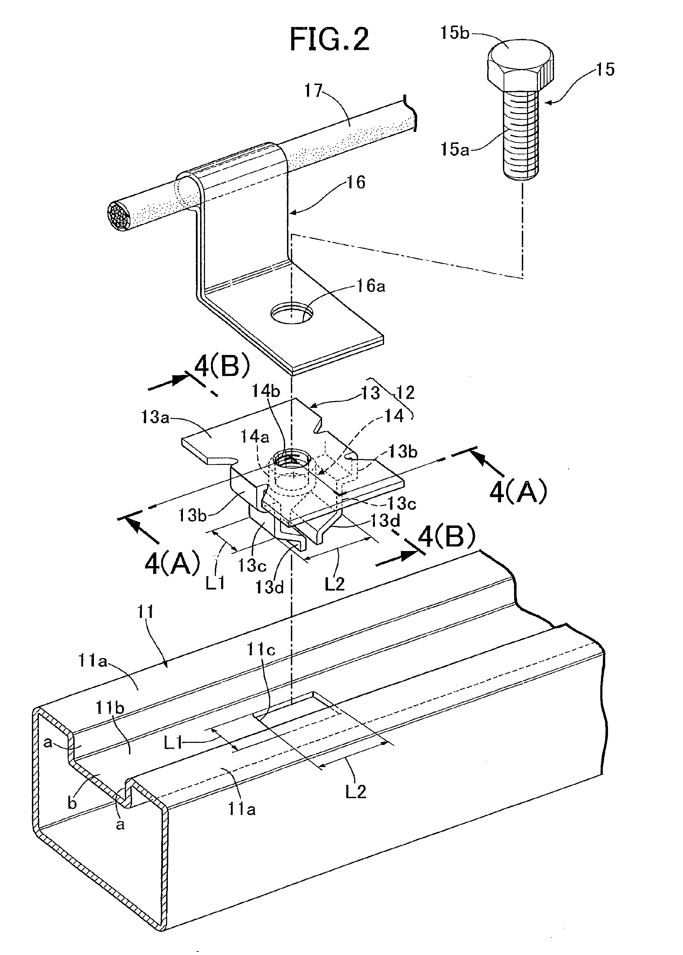

As shown in FIG. 1 and FIG. 2, a vehicle body frame 11 of for example an automobile is a member forming a rectangular closed cross-section. Formed, among the four faces thereof, on one face along the longitudinal direction of the vehicle body frame 11 is an angular groove-shaped bead 11b sandwiched by two surfaces 11a and 11a. The bead 11b includes a pair of side walls a and a and a bottom wall b sandwiched by the two side walls a and a, and a rectangular opening 11c is formed in the bottom wall b.

As shown in FIG. 1 to FIG. 4, a bracket with nut 12 that is fitted into the opening 11c of the bottom wall b of the bead 11b of the vehicle body frame 11 is formed from a bracket part 13 and a nut part 14 that are formed as a unit. The bracket part 13 is formed by bending a single sheet of metal plate and includes a substantially rectangular plate-shaped base portion 13a, a pair of first leg portions 13b and 13b having an L-shaped cross section and extending inwardly (direction in which they approach each other) from two mutually parallel sides of the base portion 13a, a pair of second leg portions 13c and 13c extending linearly downwardly from the tips of the first leg portions 13b and 13b, and a pair of third leg portions 13d and 13d having an L-shaped cross section and extending inwardly (direction in which they approach each other) from the tips of the second leg portions 13c and 13c.

The first to third leg portions 13b, 13b, 13c, 13c, 13d, and 13d are formed by bending two band-shaped portions having a constant width L1 of the single sheet of metal plate, and the width L1 is substantially coincident with the width L1 of the opening 11c along a direction perpendicular to the longitudinal direction of the bead 11b. The second leg portions 13c and 13c and the third leg portions 13d and 13d can be inserted into the opening 11c, a distance L2 between the tips of the pair of first leg portions 13b and 13b is substantially coincident with the width L2 of the opening 11c in the longitudinal direction of the bead 11b, and base ends of the second leg portions 13c and 13c can abut against the edge of the opening 11c.

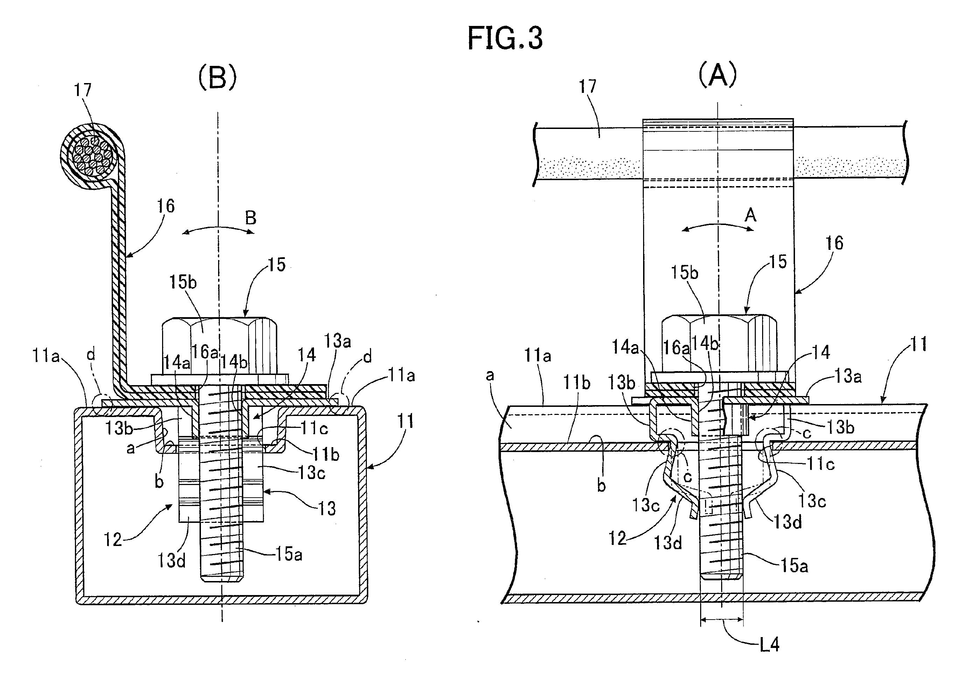

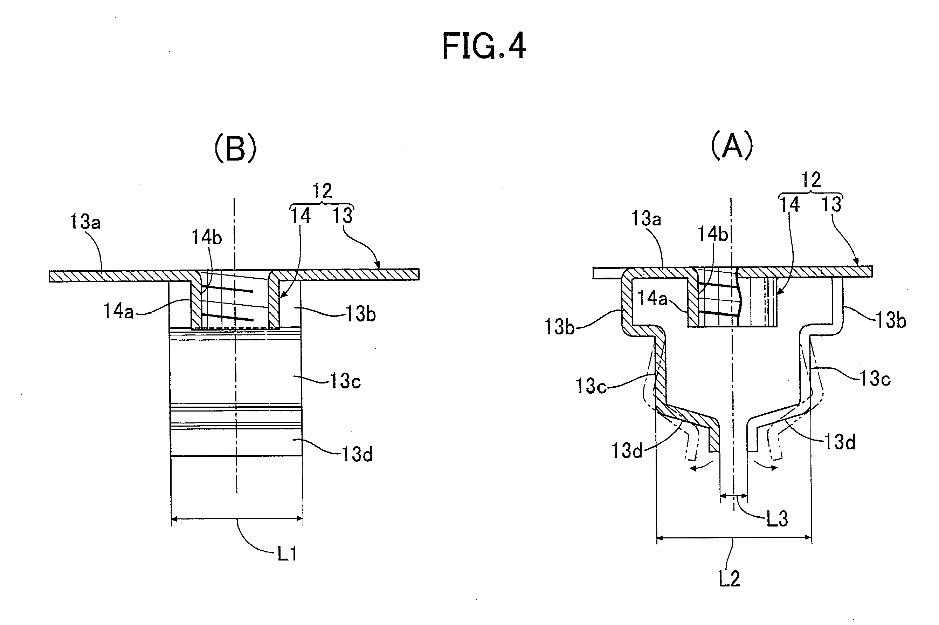

The nut part 14 is formed by machining a female thread 14b on an inner face of a boss portion 14a formed by flanging a portion, sandwiched between the pair of first leg portions 13b and 13b, of the base portion 13a of the bracket part 13. When the second leg portions 13c and 13c and the third leg portions 13d and 13d of the bracket part 13 are fitted into the opening 11c of the vehicle body frame 11, a gap L3 (see FIG. 4 (A)) of the pair of third leg portions 13d and 13d is set smaller than a diameter L4 (see FIG. 3 (A)) of a shaft portion 15a of a bolt 15. Therefore, when the bolt 15 is screwed into the female thread 14b of the nut part 14, the shaft portion 15a of the bolt 15 pushes apart the gap L3 between the pair of third leg portions 13d and 13d, and the pair of second leg portions 13c and 13c connected to the third leg portions 13d and 13d are opened out into a downward divergent shape.

A stay 16 formed by bending a metal plate is fixed by being held between the base portion 13a of the bracket part 13 and a head portion 15b of the bolt 15, which extends through a bolt hole 16a formed in the base side of the stay 16, and a wire harness 17 disposed along the vehicle body frame 11 is supported on a loop portion at the tip of the stay 16.

The operation of the embodiment of the present invention having the above arrangement is now explained.

First, as shown by a chain line in FIG. 3 (A), the third leg portions 13d and 13d and the second leg portions 13c and 13c of the bracket part 13 of the bracket with nut 12 are inserted into the opening 11c of the bottom wall b of the bead 11b of the vehicle body frame 11, and a horizontal part of the first leg portions 13b and 13b is made to abut against the bottom wall b of the bead 11b. In this arrangement, if lower parts of the second leg portions 13c and 13c are slightly opened up so that outer faces of the second leg portions 13c and 13c resiliently abut against the edge of the opening 11c, the attitude of the bracket with nut 12, which is provisionally supported in the opening 11c, is stabilized.

Subsequently, screwing the bolt 15, which extends through the bolt hole 16a of the stay 16 supporting the wire harness 17, into the female thread portion 14b of the nut part 14 of the bracket with nut 12 makes the shaft portion 15a of the bolt 15 push apart the gap between the pair of third leg portions 13d and 13d, and as shown by the solid line in FIG. 3 (A) bent portions c and c between the first leg portions 13b and 13b and the second leg portions 13c and 13c engage with the edge of the opening 11c of the bottom wall b of the bead 11b, thus fixing the bracket with nut 12 to the vehicle body frame 11. The stay 16 sandwiched between the base portion 13a of the bracket with nut 12 and the head portion 15b of the bolt 15 is strongly fixed to the vehicle body frame 11.

In this way, in a state in which the bolt 15 is screwed into the nut part 14, the stay 16 is sandwiched between the flat base portion 13a and a flat lower face of the head portion 15b of the bolt 15, and it is therefore possible to make the tightening force of the bolt 15 act fully on the stay 16. Moreover, since the diameter of the head portion 15b of the bolt 15 can be made larger than the width of the bead 11b, it becomes possible to yet more reliably fix the stay 16.

Furthermore, even if a moment in the direction of arrow A in FIG. 3 (A) acts on the stay 16, since the bent portions c and c of the bracket part 13 engage with the edge of the opening 11c, tilting of the bracket with nut 12 is prevented. Even if a moment in the direction of arrow B in FIG. 3 (B) acts on the stay 16, since corners d and d at opposite ends of the base portion 13a of the bracket part 13 abut against the surfaces 11 a and 11a of the vehicle body frame 11, tilting of the bracket with nut 12 is prevented.

As hereinbefore described, in accordance with the present embodiment, even if the width of the bead 11b of the vehicle body frame 11 is narrow, it is possible to enhance the securing rigidity by utilizing the entire face of the base portion 13a straddling the surfaces 11a and 11a of the vehicle body frame 11 on opposite sides of the bead 11c as a securing face for the stay 16. Moreover, it becomes possible to increase the diameter of the head portion 15b of the bolt 15 without being limited by the width of the bead 11b, and a sufficient tightening force can be ensured. Furthermore, since the bracket with nut 12 can be fitted from the outside of the opening 11c, it can easily be fitted, even for a vehicle body frame 11 having a closed cross-section.

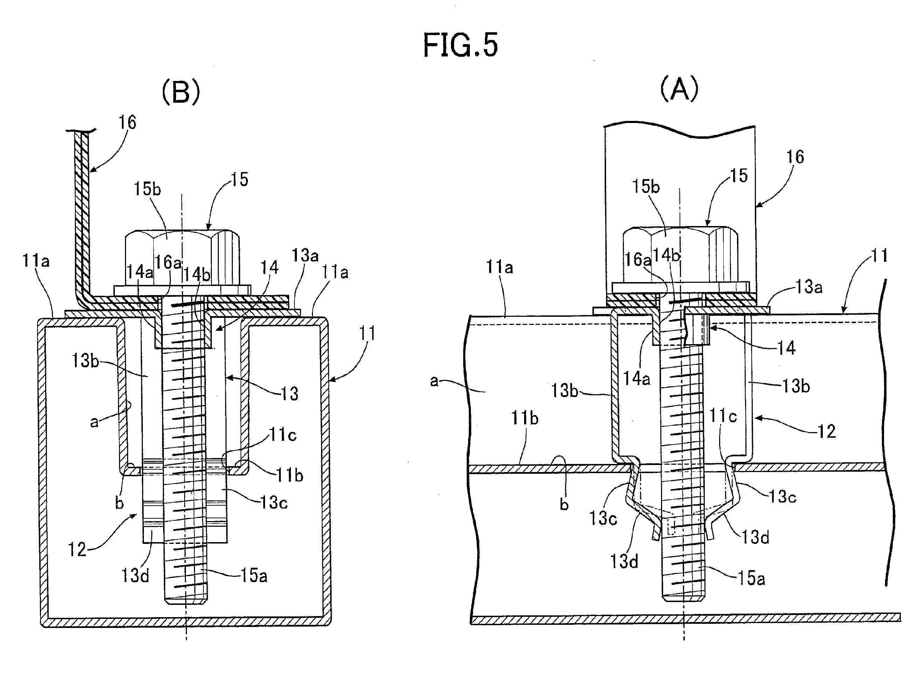

A second embodiment of the present invention is now explained by reference to FIG. 5.

### SECOND EMBODIMENT

In the second embodiment, compared with the first embodiment, the depth (side wall a, height of a) of a bead 11b of a vehicle body frame 11 is larger. Such a case can also be dealt with merely by lengthening first leg portions 13b and 13b of a bracket with nut 12. If the depth of the bead 11b is large, a bracket with nut 12 would easily tilt when a moment in direction A or a moment in direction B applies, but tilting of the bracket with nut 12 can be prevented by the same operation as that of the first embodiment.

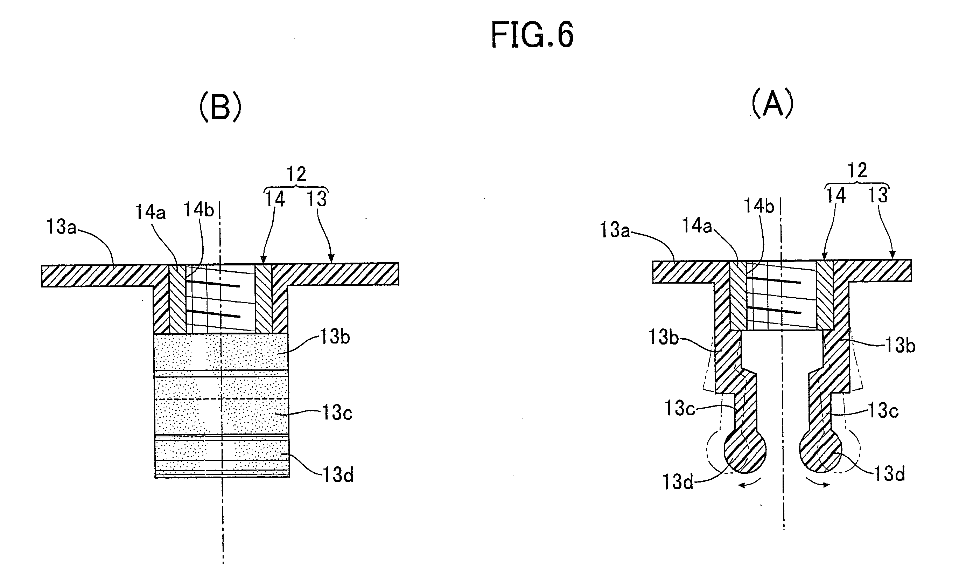

A third embodiment of the present invention is now explained by reference to FIG. 6.

### THIRD EMBODIMENT

In the first and second embodiments, the bracket part 13 of the bracket with nut 12 is formed from a metal plate, but in the third embodiment a bracket part 13 is formed as a unit from a synthetic resin. A nut part 14 made of metal is inserted into a base portion 13a of the bracket part 13. In accordance with the third embodiment, portions of third leg portions 13d and 13d that are expanded into a columnar shape are pushed apart by means of a shaft portion 15a of a bolt 15, and in the same manner as in the first and second embodiments, bent portions c and c between first leg portions 13b and 13b and second leg portions 13c and 13c engage with the edge of an opening 11c of a bottom wall b of a bead 11b, and the bracket with nut 12 is therefore fixed to a vehicle body frame 11.

Embodiments of the present invention are explained above, but the present invention may be modified in a variety of ways as long as the modifications do not depart from the spirit and scope thereof.

For example, in the first and second embodiments the nut part 14 is formed integrally with the bracket part 13, but a nut part 14 and a bracket part 13 may be separate members and be fixed by welding or swaging.

Furthermore, in the third embodiment the nut part 14 is made of metal and is inserted into the bracket part 13, which is made of a synthetic resin, but when the tightening force of the bolt 15 can be low, a nut part 14 and a bracket part 13 may be formed as a unit from a synthetic resin.

Moreover, the member of the present invention is not limited to the vehicle body frame 11 of the embodiment, and the member is not limited to one having a closed cross-section either.

## Claims

1. A bracket with nut (12) that is fitted into an interior of a groove-shaped bead (11b) formed on a surface (11a) of a member (11),
the bracket with nut (12) comprising a nut part (14) into which a bolt (15) is screwed, and a bracket part (13) that supports the nut part (14) and is retained by an opening (11c) formed in a bottom wall (b) of the bead (11b),
the bracket part (13) comprising a base portion (13a) that abuts against the surface (11a) on opposite sides of the bead (11b), a pair of first leg portions (13b) that extend in a direction in which the first leg portions approach each other along the bottom wall (b) of the bead (11b) from two positions, in a longitudinal direction of the bead (11b), of the base portion (13a), a pair of second leg portions (13c) that extend from tips of the pair of first leg portions (13b) while extending through the opening (11c), and a pair of third leg portions (13d) that extend in a direction in which the third leg portions approach each other from the tips of the pair of second leg portions (13c) and are opened out by the bolt (15), and the nut part (14) being provided at a position, sandwiched by the pair of first leg portions (13b), of the base portion (13a).

2. The bracket with nut according to Claim 1, wherein the second leg portion (13c) has a width that is substantially equal to the width, in a direction perpendicular to the longitudinal direction of the bead (11b), of the opening (11c).

3. The bracket with nut according to Claim 1 or Claim 2, wherein the bracket part (13) is formed by bending a single sheet of metal plate.

4. The bracket with nut according to any one of Claim 1 to Claim 3, wherein the nut part (14) is formed integrally with the bracket part (13).

5. The bracket with nut according to Claim 1 or Claim 2, wherein the bracket part (13) is formed as a unit from a resin.

6. The bracket with nut according to Claim 5, wherein the nut part (14) is formed integrally with the bracket part (13).

## Patentansprüche

1. Halterung mit einer Mutter (12), welche in ein Inneres einer nutförmigen Sicke (11 b) eingesetzt ist, welche an einer Oberfläche (11 a) eines Elements (11) ausgebildet ist,
wobei die Halterung mit einer Mutter (12) einen Mutterteil (14) umfasst, in den ein Bolzen (15) eingeschraubt ist, und einen Halterungsteil (13) umfasst, welcher den Mutterteil (14) abstützt und durch eine Öffnung (11 c) gehalten ist, welche in einer Bodenwand (b) von der Sicke (11 b) ausgebildet ist,
wobei der Halterungsteil (13) einen Basisabschnitt (13a) umfasst, welcher auf gegenüberliegenden Seiten der Sicke (11 b) an der Oberfläche (11a) anliegt, ein Paar von ersten Beinabschnitten (13b) umfasst, die sich in einer Richtung erstrecken, in welcher die ersten Beinabschnitte einander von dem Basisabschnitt (13a) in einer Längsrichtung der Sicke (11b) entlang der Bodenwand (b) von der Sicke (11b) von zwei Positionen annähern, ein Paar von zweiten Beinabschnitten (13c) umfasst, welche sich von äußeren Enden von dem Paar von ersten Beinabschnitten (13b) aus erstrecken, während sie sich durch die Öffnung (11c) erstrecken, und ein Paar von dritten Beinabschnitten (13d) umfasst, welche sich von den äußeren Enden von dem Paar von zweiten Beinabschnitten (13c) in einer Richtung erstrecken, in welcher die dritten Beinabschnitte einander annähern, und welche durch den Bolzen (15) aufgeweitet werden, und der Mutterteil (14) an einer Position des Basisabschnitts (13a) vorgesehen ist, welche durch das Paar von ersten Beinabschnitten (13b) dazwischenliegend aufgenommen ist.

2. Halterung mit einer Mutter nach Anspruch 1, wobei der zweite Beinabschnitt (13c) eine Breite hat, die in einer Richtung orthogonal zu der Längsrichtung von der Sicke (11 b) im Wesentlichen der Breite der Öffnung (11 c) entspricht.

3. Halterung mit einer Mutter nach Anspruch 1 oder 2, wobei der Halterungsteil (13) durch Biegen einer einzelnen Metallblechplatte gebildet ist.

4. Halterung mit einer Mutter nach einem der Ansprüche 1 bis 3, wobei der Mutterteil (14) integral mit dem Halterungsteil (13) ausgebildet ist.

5. Halterung mit einer Mutter nach Anspruch 1 oder 2, wobei der Halterungsteil (13) als eine Einheit aus einem Harz/Kunstharz ausgebildet ist.

6. Halterung mit einer Mutter nach Anspruch 5, wobei der Mutterteil (14) integral mit dem Halterungsteil (13) ausgebildet ist.

## Revendications

1. Support à écrou (12) qui est monté dans un intérieur d'un bourrelet en forme de rainure (11b) formé sur une surface (11a) d'un élément (11),
le support à écrou (12) comprenant une partie d'écrou (14) dans laquelle un boulon (15) est vissé, et une partie de support (13) qui supporte la partie d'écrou (14) et est retenue par une ouverture (11c) formée dans une paroi inférieure (b) du bourrelet (11b),
la partie de support (13) comprenant une partie de base (13a) qui vient en butée contre la surface (11a) sur les côtés opposés du bourrelet (11b), une paire de premières parties de patte (13b) qui s'étendent dans une direction dans laquelle les premières parties de patte se rapprochent le long de la paroi inférieure (b) du bourrelet (11b) à partir de deux positions, dans une direction longitudinale du bourrelet (11b), de la partie de base (13a), une paire de deuxièmes parties de patte (13c) qui s'étendent à partir des pointes de la paire de premières parties de patte (13b) tout en s'étendant à travers l'ouverture (11c), et une paire de troisièmes parties de patte (13d) qui s'étendent dans une direction dans laquelle les troisièmes parties de patte se rapprochent à partir des pointes de la paire de deuxièmes parties de patte (13c) et sont ouvertes par le boulon (15), et la partie d'écrou (14) étant prévue dans une position, prise en sandwich par la paire de premières parties de patte (13b), de la partie de base (13a).

2. Support à écrou selon la revendication 1, dans lequel la deuxième partie de patte (13c) a une largeur qui est sensiblement égale à la largeur, dans une direction perpendiculaire à la direction longitudinale du bourrelet (11b), de l'ouverture (11c).

3. Support à écrou selon la revendication 1 ou 2, dans lequel la partie de support (13) est formée en pliant une seule feuille de plaque de métal.

4. Support à écrou selon l'une quelconque des revendications 1 à 3, dans lequel la partie d'écrou (14) est formée de manière solidaire avec la partie de support (13).

5. Support à écrou selon la revendication 1 ou la revendication 2, dans lequel la partie de support (13) est formée sous la forme d'une unité à partir d'une résine.

6. Support à écrou selon la revendication 5, dans lequel la partie d'écrou (14) est formée de manière solidaire avec la partie de support (13).
